# EUROPÄISCHE PATENTSCHRIFT

(11) **EP 0 667 204 B1**
(45) Veröffentlichungstag und Bekanntmachung des Hinweises auf die Patenterteilung: **07.04.1999**
(21) Anmeldenummer: 94102208.9
(22) Anmeldetag: 14.02.1994
(51) Int. Cl.: B23K 9/028, B23K 9/127

(54) **Vorrichtung und Verfahren zum längsseitigen Verschweissen von Rohren mit Flachstählen**
Method and apparatus to longitudinally weld tubes with flat steels
Méthode et appareillage pour le soudage longitudinal de tuyaux et d'aciers plats

(43) Veröffentlichungstag der Anmeldung: 16.08.1995
(73) Patentinhaber: ASEA BROWN BOVERI AG, 5400 Baden (CH)
(72) Erfinder: Junker, Peter, CH-8425 Oberembrach (CH)

(56) Entgegenhaltungen:
- EP-A- 0 167 390
- SCHWEISSEN UND SCHNEIDEN, Bd.39, Nr.4, April 1987, DüSSELDORF Seiten 175 - 179 EICHHORN ET AL. 'Weiterentwicklung eines automatischen, sensorlosen Schweisskopfführungssystems für das Unterpulververbindungsschweissen'
- SCHWEISSEN UND SCHNEIDEN, Bd.42, Nr.11, November 1990, DüSSELDORF, DE Seiten 564 - 567 EICHHORN ET AL. 'Prozessorientiertes Schweisskopfführungssystem für das Metall-Schutzgas-Engspaltschweissen.'

## Beschreibung

### Technisches Gebiet

Die Erfindung betrifft eine Vorrichtung und ein Verfahren zum längsseitigen Verschweissen von Rohren mit Flachstählen, welche zur Herstellung von gasdichten Rohrwänden für Industrie- und Kraftwerkskesselanlagen dienen.

### Stand der Technik

Zur Herstellung von Industrie- und Kraftwerkskesselanlagen müssen Tausende von Metern Schweissverbindungen zwischen den Kesselwandrohren und dazwischen angeordneten Flachstählen hergestellt werden. Diese sogenannten Rohrwände bilden einen grossen Teil der Industrie- bzw. Kraftwerkskessel.

Bekannt ist, dass zum Schweissen derartiger Rohrwände vor allem das Unterpulver (UP)-Schweissverfahren angewendet wird. Das UP-Verfahren hat den Vorteil, dass der Lichtbogen stabilisiert und spritzerfrei unter einer Pulverschicht brennt, die gleichzeitig den Schutz gegen schädliche Atmosphäre und Desoxydation sowie die Schlackenbildung für den einwandfreien metallurgischen Ablauf des Prozesses übernimmt. Das Verfahren zeichnet sich durch eine hohe Abschmelzleistung und durch eine geringe Fehlerhäufigkeit aus. Allerdings hat es den Nachteil, dass normalerweise nur in der sogenannten Wannenlage, d.h. in der horizontalen Ebene, geschweisst werden kann.

Das bedeutet, dass beim Schweissen der Kesselrohrwände bisher immer in zwei Durchgängen geschweisst werden musste, denn die Qualitätsanforderungen verlangen eine weitgehende Durchschweissung zwischen Rohr und Flachstahl. Der Schweisskopf ist dabei fest und die zu verbindenden Teile sind bewegt.

Die Verbindungen werden also in einem ersten Durchlauf zunächst an beiden Seiten von oben geschweisst. Dann werden die miteinander verschweissten Teile gewendet und in einem zweiten Durchlauf an den restlichen beiden Seiten fertig geschweisst. Diese Tatsache bedingt aber einen relativ grossen Handling- und Schweisszeitanteil am gesamten Fabrikationsprozess. Da die Möglichkeiten einer Erhöhung der Schweissgeschwindigkeit mittlerweile ausgeschöpft sind, kommt zur Beschleunigung des Gesamtprozesses nur der Einsatz eines anderen Schweissverfahrens in Frage.

Bekannt sind zwar auch Überkopf-UP-Schweissverfahren (DE 26 40 270, DE 34 25 225, DE 34 30 349), bei denen das Schweissbad im Vergleich zum "normalen" UP-Schweissen gleichsam um 180° gedreht worden ist und das Schweisspulver und die Elektrode an der Schweissstelle von unten nach oben zugeführt werden. Das Schweisspulver muss dort zwangsweise an die Schweissstelle angepresst werden. Die Hauptschwierigkeit der Überkopf-UP-Schweissung besteht in der Gewährleistung der Ausbildung einer einwandfreien Schweissnaht, da das Schweissbad in der Schwebe gehalten werden muss, was zur Instabilität der Kennwerte des Schweissbades führt. Die Qualität der Schweissnaht ist deshalb bei diesem Verfahren oft nicht so hoch, wie sie nach den Anforderungen an die Kesselanlagen sein müsste. Zur Erzielung der vorgeschriebenen Einschmelztiefe ist nämlich hier ein Schweissen mit relativ hohen Schweissparametern notwendig. Eine Kombination der Schweissbad- und Pulverzufuhrvorrichtungen ist bei den gegebenen Platzverhältnissen für die Rohrwandschweissung nicht möglich.

Seit Jahren ist auch das Metall-Schutzgas-(MSG)-Schweissverfahren für viele Anwendungsmöglichkeiten bekannt, welches in den letzten Jahren mit Hilfe der Elektronik und durch Einsatz neuer Schutzgase markant verbessert werden konnte. Heute ist man in der Lage, den Tropfenübergang mittels Impulslichtbogen synergetisch zu steuern, was dazu führt, dass das Schmelzbad sehr gut beherrsch- und modellierbar ist. Eine MSG-Schweissung der Rohrwände erscheint daher ebenfalls möglich. Dieses Verfahren hat sich aber für die Schweissung von Rohrwänden bisher nicht durchgesetzt, da das UP-Verfahren dafür leichter zu handhaben ist und u.a. zusätzliche Schutzmassnahmen, z.B. gegen den grellen Lichtbogen beim MSG-Verfahren, beim UP-Verfahren nicht nötig sind.

Zur Führung von Schweissbrennern bei verschiedenen Schweissverfahren ist der Einsatz von Pendelgeräten bekannt, mit denen es gelingt, das Schmelzbad zu verbreitern und so Ungleichmässigkeiten im Fugenabstand zu überbrücken und eine gute Qualität der Schweissnaht zu erzeugen. Nachteilig ist, dass die marktüblichen Pendelgeräte relativ langsam arbeiten.

### Darstellung der Erfindung

Die Erfindung versucht, all diese Nachteile zu vermeiden. Ihr liegt die Aufgabe zugrunde, ein Verfahren und eine Vorrichtung zum längsseitigen Verschweissen von Rohren mit Flachstählen zu Rohrwänden zu entwickeln, mit denen es möglich ist, unter markanter Zeiteinsparung im Vergleich zum Stand der Technik sowohl die oberen als auch die unteren Nähte automatisch in hervorragender Qualität zu schweissen, wobei weitgehend auf das bekannte UP-Schweissverfahren zurückgegriffen werden soll.

Erfindungsgemäss wird dies bei einem Verfahren gemäss dem Oberbegriff des Hauptanspruches 1 dadurch erreicht, dass gleichzeitig zu der auf der Oberseite in bekannter Weise erfolgenden UP-Schweissung auf der Unterseite eine kombinierte MSG-Pendelschweissung ausgeführt wird, bei der die Brenner mit einer Pendelvorrichtung seitlich in Bewegung versetzt werden und die Pendelgeschwindigkeit zur Führung des Schweissbrenners mit der Vorschubgeschwindigkeit der zu verschweissenden Teile koordiniert wird.

Erfindungsgemäss wird dies bei einer Vorrichtung durch Durchführung des Verfahrens, bei der in einem Maschinenständer eine automatische UP-Schweissvorrichtung mit mindestens einem Paar feststehender Schweissbrenner, mit Mitteln zum Nachschub und zur Führung des Schweissdrahtes und mit Mitteln zur Zu- und Abführung des Schweisspulvers zur Schweissung der Nähte auf der Oberseite sowie eine Transportvorrichtung zum Anpressen und Transportieren der zu verschweissenden Teile während des Schweissvorganges angeordnet sind, dadurch erreicht, dass unterhalb der zu verschweissenden Teile im Maschinenständer mindestens eine kombinierte MSG-Puls-Pendelvorrichtung mit einem Paar Brenner zur gleichzeitigen Schweissung der Nähte auf der Unterseite angeordnet ist, wobei die MSG-Brenner in einem bestimmten Längsabstand von den UP-Brennern angeordnet sind, durch die Pendelvorrichtung seitlich leicht in Bewegung versetzbar sind und einen verstellbaren Neigungswinkel aufweisen.

Die Vorteile der Erfindung sind unter anderem darin zu sehen, dass die Kesselrohrwände in einem einzigen Arbeitsgang, d.h. sowohl von oben wie auch gleichzeitig von unten (Überkopfposition), geschweisst werden können. Dadurch kommt es zu einer enormen Zeiteinsparung, denn der Fabrikationsprozess verkürzt sich um ca. 50 bis 60%. Das Verfahren läuft weitgehend automatisch ab und ist deshalb besonders wirtschaftlich.

Es ist vorteilhaft, wenn die Grösse der Vorschubgeschwindigkeit in Abhängigkeit von der Rohrwandstärke so gewählt wird, dass keine zusätzliche Kühlung notwendig ist.

Ausserdem ist es zweckmässig, wenn mit einer Vorschubgeschwindigkeit im Bereich von 1,1 m/min bis 1,5 m/min, vorzugsweise 1,3 m/min, gearbeitet wird. Dadurch ist keine zusätzliche Kühlung notwendig, der Flachstahl verzundert nicht und das Verfahren ist vom Zeitaufwand her gesehen sehr effektiv.

Es ist besonders zweckmässig, wenn bei der MSG-Puls-Pendelschweissung mindestens pro 2 mm Vorschub eine Pendelbewegung durchgeführt wird. Durch diese äusserst schnelle Pendelung wird das Schmelzbad genügend verbreitert, so dass Ungenauigkeiten bei der Rohrherstellung ausgeglichen werden und auf eine sensorgesteuerte Brenneranordnung verzichtet werden kann.

Ferner ist es vorteilhaft, wenn die Schweissparameter so gewählt werden, dass die nicht durchgeschweisste Dicke des Flachstahles maximal das 0,3-fache der Dicke des Flachstahles beträgt, dass die Summe der Nahtdicken auf der Oberseite und auf der Unterseite jeweils mindestens das 1,25-fache der Dicke des Flachstahles beträgt und die Dicke des nichtaufgeschmolzenen Rohrmaterials mindestens 2 mm beträgt.

Schliesslich wird mit Vorteil eine Vorrichtung benutzt, bei der der Längsabstand zwischen UP- und MSG-Brennern ca. 320 mm beträgt. Dadurch findet keine gegenseitige ungünstige Beeinflussung beider Schweissverfahren statt.

Vorteilhafterweise beträgt der Neigungswinkel α zwischen der Mittellinie des MSG-Brenners und der Vertikalen 27° bis 30°.

Weiterhin ist es zweckmässig, wenn aus Kostengründen an beiden MSG-Brennern nur eine gemeinsame Pendelvorrichtung vorhanden ist, wobei aber selbstverständlich auch an jedem MSG-Brenner eine Pendelvorrichtung angeordnet sein kann.

### Kurze Beschreibung der Zeichnung

In der Zeichnung ist ein Ausführungsbeispiel der Erfindung dargestellt.

Es zeigen:
- Fig. 1: einen Querschnitt der fertig geschweissten Verbindung des Flachstahles mit zwei Rohren;
- Fig. 2: einen Querschnitt durch die wesentlichen Teile der erfindungsgemässen Vorrichtung in der Ebene der UP-Brenner, wobei die davorliegenden MSG-Brenner zum besseren Verständnis der gesamten Anordnung mit dargestellt sind;
- Fig. 3: einen Teillängsschnitt der Vorrichtung und der zu verschweissenden Metallteile in der Ebene zweier übereinander liegender Schweisnähte.

Es sind nur die für das Verständnis der Erfindung wesentlichen Elemente gezeigt. Nicht dargestellt sind von der Anlage beispielsweise die Stromzuführung, die Brennerbefestigung und die Steuergeräte.

### Weg zur Ausführung der Erfindung

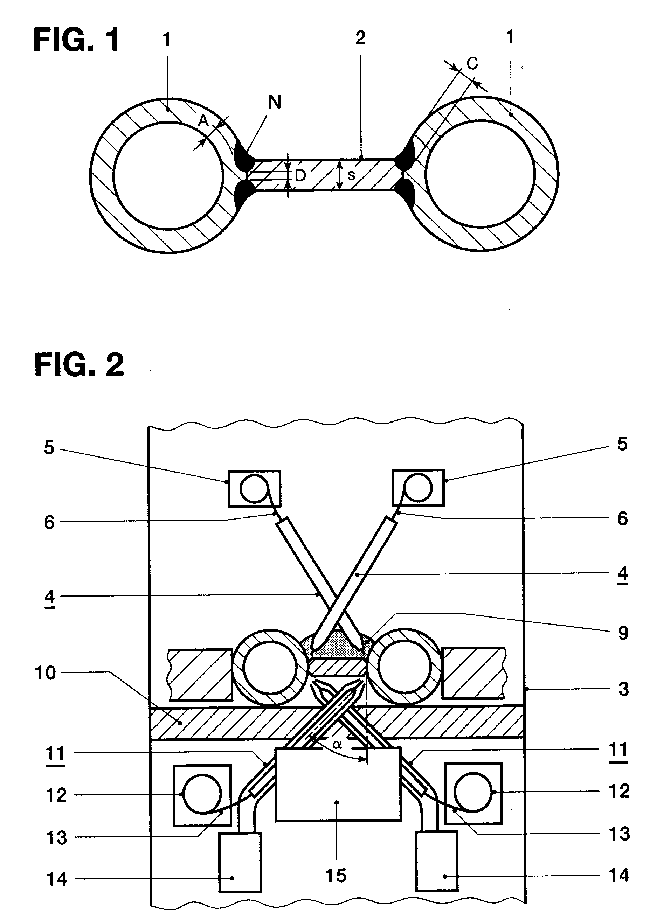

Nachfolgend wird die Erfindung anhand von Ausführungsbeispielen und der Fig. 1 bis 3 näher erläutert.

Mit dem erfindungsgemässen Verfahrens soll mit möglichst geringem Aufwand die in Fig. 1 dargestellte Schweissverbindung hergestellt werden. Für die Fabrikation gasdichter Kesselrohrwände müssen die Rohre 1 mit dazwischen angeordneten Flachstählen 2 verschweisst werden. Dabei sind sowohl an der Oberseite des Flachstahles 2 als auch an der Unterseite des Flachstahles 2 an jeder Seite zwei Schweissnähte N, also insgesamt vier Schweissnähte N herzustellen, wobei mit N1 und N2 die oberen Schweissnähte und mit N3 und N4 die unteren schweissnähte bezeichnet werden.

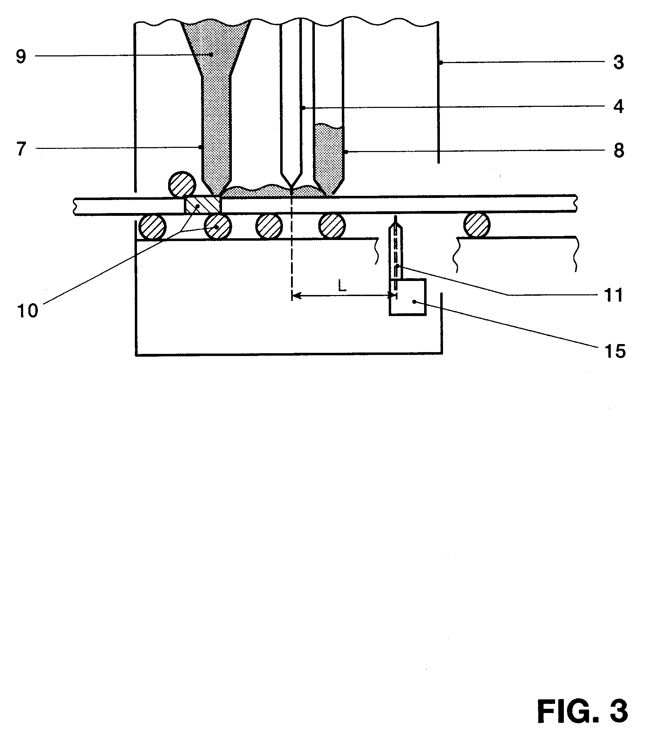

Fig. 2 und Fig. 3 zeigen vereinfacht die Herstellung der Schweissverbindungen. Zur Erzeugung der oberen Nähte N1 und N2 wird ein üblicher UP-Schweissautomat benutzt. Im Maschinenständer 3 sind zwei feststehende UP-Schweissbrenner 4 mit Mitteln 5 zum Nachschub und zur Führung des Schweissdrahtes 6 und mit Mitteln zur Zuführung 7 und Mitteln zur Abführung 8 des Schweisspulvers 9 zur Schweissung der Nähte N1 und N2 auf der Oberseite sowie eine Transportvorrichtung 10 zum Anpressen und Transportieren der zu verschweissenden Teile 1, 2 während des Schweissvorganges angeordnet. Unterhalb der zu verschweissenden Teile 1, 2 ist im Maschinenständer 3 eine kombinierte MSG-Puls-Pendelvorrichtung mit zwei Brennern 11, mit Mitteln 12 zum Nachschub und zur Führung des MSG-Schweissdrahtes 13 und mit Mitteln 14 zur Schutzgaszuführung zwecks gleichzeitiger Schweissung der Nähte N3 und N4 auf der Unterseite angeordnet. Die MSG-Brenner 11 weisen dabei einen bestimmten Längsabstand L von den UP-Brennern 4 auf, sind durch die Pendelvorrichtung 15 seitlich leicht in Bewegung versetzbar und haben einen verstellbaren Neigungswinkel α zwischen der Mittellinie des Brenners 11 und der Vertikalen. Der Längsabstand L zwischen den UP-Brennern 4 und den MSG-Brennern 11 beträgt ca. 320 mm und der Neigungswinkel α beträgt 27°. An beiden MSG-Brennern 11 ist eine gemeinsame Pendelvorrichtung 15 angebracht, die die Brenner 11 in eine seitliche Pendelbewegung versetzt. Selbstverständlich können in einem anderen Ausführungsbeispiel auch jeweils eine Pendelvorrichtung 15 an jedem Brenner 11 angeordnet sein. Ausserdem ist es in anderen Ausführungsbeispielen auch möglich, mehrere, jeweils paarweise angeordnete UP-Brenner (4) und MSG-Brenner (11) hintereinander anzuordnen.

Das erfindungsgemässe Verfahren wird anhand der längsseitigen Verschweissung von Rohren aus St 35.8/I mit einem Durchmesser von 60,3 mm und einer Wandstärke von 4,5 mm mit einem Flachstahl aus St 37-2 mit einer Breite von 19,7 mm und einer Dicke S von 6,0 mm mit der oben beschriebenen Vorrichtung zwecks Herstellung einer Kesselrohrwand näher beschrieben. Die zu verbindenden Teile 1,2 werden mit Hilfe der Transportvorrichtung 10 den Schweissbrennern 4 zugeführt und aneinandergepresst. Die oberen Nähte N1 und N2 werden mittels des bekannten UP-Schweissverfahrens geschweisst, wobei ein UP-Draht 6 des Typs EMS 3Mo mit einem Durchmesser von 2,5 mm und handelsübliches UP-Pulver 9 verwendet werden. Gleichzeitig werden die unteren Nähte N3 und N4 mittels der kombinierten MSG-Puls-Pendelschweissung geschweisst. Als MSG-Schweissdraht 13 wird Carbofil 100 mit einem Duchmesser von 1,6 mm verwendet. Als Schutzgas wird ein Gemisch aus 82% Argon und 18% Kohlendioxid verwendet. Die Schweissgeschwindigkeit der Rohrwand, d.h. die Vorschubgeschwindigkeit, beträgt 1,3 m/min. Dadurch wird erreicht, dass die Wärmeabfuhr genügend gross ist und keine zusätzliche Kühlung notwendig ist. Die Pendelgeschwindigkeit wird mit der Vorschubgeschwindigkeit koordiniert. Pro 2 mm Vorschub findet eine Pendelbewegung statt. Durch diese äusserst schnelle Pendelung wird das Schmelzbad genügend verbreitert, so dass Ungenauigkeiten bei der Rohrherstellung ausgeglichen werden und auf eine sensorgesteuerte Brenneranordnung verzichtet werden kann.

Die Schweissparameter werden so gewählt werden, dass die nicht durchgeschweisste Dicke D des Flachstahles 2 maximal das 0,3-fache der Dicke S des Flachstahles 2 beträgt, dass die Summe der Nahtdicken auf der Ober- und Unterseite C1+C2 bzw. C3+C4 jeweils mindestens das 1,25-fache der Dicke S des Flachstahles 2 und die Dicke des nicht aufgeschmolzenen Rohrmaterials A mindestens 2 mm betragen. Im gewählten Ausführungsbeispiel wird deshalb mit folgenden Schweissparametern der MSG-Pulsbrenner gearbeitet: Der Brenner 11, der einen etwas geringeren Abstand zum UP-Brenner 4 hat, arbeitet mit einer Spannung von 23 V und einer Stromstärke von 298 A bei einer Drahtvorschubgeschwindigkeit von 5 m/min, während der zweite Brenner 11 mit einer Spannung von 21,5 V und einer Stromstärke von 297 A bei einem Drahtvorschub von 4,5 m/min betrieben wird.

Durch das Verschweissen der Kesselrohrwände in einem einzigen Durchgang, d.h. dem gleichzeitigen automatischen Schweissen von oben und von unten, kann der Fabrikationsprozess um ca. 50 bis 60% verkürzt werden. Im Vergleich zum bisherigen Stand der Technik führt das zu einer bedeutenden Kosteneinsparung.

Die Schweissnähte weisen eine sehr gute Qualität auf und erfüllen die hohen Anforderungen des Kesselbaus.

### Bezugszeichenliste

- 1: Rohr
- 2: Flachstahl
- 3: Maschinenständer
- 4: UP-Brenner
- 5: Mittel zum Nachschub und zur Führung des UP-Schweissdrahtes
- 6: UP-Schweissdraht
- 7: Mittel zur Zuführung des UP-Pulvers
- 8: Mittel zur Abführung des UP-Pulvers
- 9: UP-Pulver
- 10: Transportvorrichtung
- 11: MSG-Brenner
- 12: Mittel zum Nachschub und zur Führung des MSG-Drahtes
- 13: MSG-Schweissdraht
- 14: Mittel zur Schutzgaszuführung
- 15: Pendelvorrichtung
- A: Dicke des nicht aufgeschmolzenen Rohrmaterials
- N: Schweissnaht
- C: Dicke der Schweissnaht
- D: nicht durchgeschweisste Dicke des Flachstahles
- S: Dicke des Flachstahles
- α: Winkel zwischen der Mittellinie des MSG-Brenners und der Vertikalen

## Patentansprüche

1. Verfahren zum längsseitigen Verschweissen von Rohren (1) mit Flachstählen (2), wobei die Schweissung jeweils an der Oberseite und an der Unterseite der Flachstähle (2) erfolgt, die Schweissbrenner (4) fest angeordnet sind, die zu verbindenden Teile (1, 2) vor der Schweissung aneinandergepresst werden und mittels einer üblichen Transporteinrichtung (10) während des Schweissvorganges in Längsrichtung bewegt werden, und die Schweissung an der Oberseite in bekannter Weise mit Hilfe eines UP-Schweissverfahrens ausgeführt wird, dadurch gekennzeichnet, dass gleichzeitig zu der auf der Oberseite erfolgenden UP-Schweissung auf der Unterseite eine kombinierte MSG-Puls-Pendelschweissung ausgeführt wird, bei der die Brenner (11) mit einer Pendelvorrichtung (15) seitlich in Bewegung versetzt werden, wobei die Pendelgeschwindigkeit zur Führung der Schweissbrenner (11) mit der Vorschubgeschwindigkeit der zu verschweissenden Teile (1, 2) koordiniert wird.

2. Verfahren nach Anspruch 1, dadurch gekennzeichnet, dass die Grösse der Vorschubgeschwindigkeit in Abhängigkeit von der Rohrwandstärke so gewählt wird, dass keine zusätzliche Kühlung notwendig ist.

3. Verfahren nach Anspruch 2, dadurch gekennzeichnet, dass mit einer Vorschubgeschwindigkeit im Bereich von 1,1 bis 1,5 m/min gearbeitet wird.

4. Verfahren nach Anspruch 3, dadurch gekennzeichnet, dass mit einer Vorschubgeschwindigkeit von 1,3 m/min gearbeitet wird.

5. Verfahren nach einem der Ansprüche 1 bis 4, dadurch gekennzeichnet, dass bei der MSG-Puls-Pendelschweissung mindestens pro 2 mm Vorschub eine Pendelbewegung durchgeführt wird.

6. Verfahren nach einem der Ansprüche 1 bis 5, dadurch gekennzeichnet, dass die Schweissparameter so gewählt werden, dass die nicht durchgeschweisste Dicke (D) des Flachstahles (2) maximal das 0,3-fache der Dicke (S) des Flachstahles (2) beträgt, dass die Summe der Nahtdicken auf der Ober- und Unterseite (C1+C2 bzw. C3+C4) jeweils mindestens das 1,25-fache der Dicke (S) des Flachstahles (2) beträgt und die Dicke des nicht aufgeschmolzenen Rohrmaterials (A) mindestens 2 mm beträgt.

7. Vorrichtung zum längsseitigen Verschweissen von Rohren (1) mit Flachstählen (2) zur Durchführung des Verfahrens nach einem der Ansprüche 1 bis 6, wobei im wesentlichen in einem Maschinenständer (3) eine automatische UP-Schweissvorrichtung mit mindestens einem Paar feststehender Schweissbrenner (4), mit Mitteln (5) zum Nachschub und zur Führung des Schweissdrahtes (6) und mit Mitteln zur Zuführung (7) und Mitteln zur Abführung (8) des UP-Pulvers (9) zur Schweissung der Nähte (N1, N2) auf der Oberseite sowie eine Transportvorrichtung (10) zum Anpressen und Transportieren der zu verschweissenden Teile (1, 2) während des Schweissvorganges angeordnet sind, dadurch gekennzeichnet, dass unterhalb der zu verschweissenden Teile (1, 2) im Maschinenständer (3) mindestens eine kombinierte MSG-Puls-Pendelvorrichtung mit einem Paar Brennern (11) zur gleichzeitigen Schweissung der Nähte (N3, N4) auf der Unterseite angeordnet ist, wobei die MSG-Brenner (11) in einem bestimmten Längsabstand (L) von den UP-Brennern (4) angeordnet sind, durch die Pendelvorrichtung (15) seitlich leicht in Bewegung versetzbar sind und einen verstellbaren Neigungswinkel (α) zwischen der Mittellinie der Brenner (4) und der Vertikalen aufweisen.

8. Vorrichtung nach Anspruch 7, dadurch gekennzeichnet, dass der Längsabstand (L) zwischen UP-Brenner (4) und MSG-Brenner (11) ca. 320 mm beträgt.

9. Vorrichtung nach einem der Ansprüche 7 bis 8, dadurch gekennzeichnet, dass der Neigungswinkel (α) des MSG-Brenners (11) ca. 27° bis 30° beträgt.

10. Vorrichtung nach einem der Ansprüche 7 bis 9, dadurch gekennzeichnet, dass an beiden MSG-Brennern (11) eine gemeinsame Pendelvorrichtung (15) angeordnet ist.

11. Vorrichtung nach einem der Ansprüche 7 bis 9, dadurch gekennzeichnet, dass an jedem MSG-Brenner (11) eine Pendelvorrichtung (15) angeordnet ist.

## Claims

1. Process for the longitudinal-side welding of tubes (1) to flat steel bars (2), the welding in each case being carried out on the top side and on the underside of the flat steel bars (2), the welding torches (4) being arranged in a fixed position, the parts (1, 2) to be joined being pressed against one another before the welding and being moved in the longitudinal direction by means of a conventional transport device (10) during the welding operation, and the welding being carried out on the top side in a known manner by means of a SAW process, characterized in that combined pulse oscillation GMAW is carried out on the underside at the same time as SAW is carried out on the top side, during which pulse oscillation GMAW the torches (11) are set in lateral motion by means of an oscillation device (15), the oscillating speed for guiding the welding torches (11) being coordinated with the feed rate of the parts (1, 2) to be welded.

2. Process according to Claim 1, characterized in that the magnitude of the feed rate is selected as a function of the tube wall thickness in such a way that no additional cooling is necessary.

3. Process according to Claim 2, characterized in that work is carried out with a feed rate in the range of 1.1 to 1.5 m/min.

4. Process according to Claim 3, characterized in that work is carried out with a feed rate of 1.3 m/min.

5. Process according to one of Claims 1 to 4, characterized in that an oscillating motion is performed at least every 2 mm of feed during the pulse oscillation GMAW.

6. Process according to one of Claims 1 to 5, characterized in that the welding parameters are selected in such a way that the non-through-welded thickness (D) of the flat steel bar (2) is at most 0.3 times the thickness (S) of the flat steel bar (2), and that the sum of the weld thicknesses on the top side and underside (C1 + C2 and C3 + C4 resp.) is in each case at least 1.25 times the thickness (S) of the flat steel bar (2), and the thickness of the tube material (A) which has not melted is at least 2 mm.

7. Apparatus for the longitudinal-side welding of tubes (1) to flat steel bars (2) for carrying out the process according to one of Claims 1 to 6, an automatic SAW device, having at least one pair of fixed welding torches (4), means (5) for feeding and guiding the welding wire (6) and means for supplying (7) and means for discharging (8) the SAW powder (9) for making the welds (N1, N2) on the top side, as well as a transport device (10) for pressing and transporting the parts (1, 2) to be welded during the welding operation being arranged essentially in a machine column (3), characterized in that at least one combined pulse oscillation GMAW device having a pair of torches (11) for simultaneously making the welds (N3, N4) on the underside is arranged in the machine column (3) underneath the parts (1,2) to be welded, in which case the GMAW torches (11) are arranged at a certain longitudinal distance (L) from the SAW torches (4), can be easily set in lateral motion by the oscillation device (15) and are at an adjustable angle of inclination (α) between the centre line of the torches (4) and the vertical.

8. Apparatus according to Claim 7, characterized in that the longitudinal distance (L) between SAW torches (4) and GMAW torches (11) is about 320 mm.

9. Apparatus according to either of Claims 7 or 8, characterized in that the angle of inclination (α) of the GMAW torch (11) is about 27° to 30°.

10. Apparatus according to one of Claims 7 to 9, characterized in that a common oscillation device (15) is arranged on the two GMAW torches (11).

11. Apparatus according to one of Claims 7 to 9, characterized in that an oscillation device (15) is arranged on each GMAW torch (11).

## Revendications

1. Procédé pour le soudage longitudinal de tubes (1) avec des plats en acier (2), dans lequel le soudage est effectué respectivement sur la face supérieure et sur la face inférieure des plats en acier (2), les brûleurs de soudage (4) sont disposés à poste fixe, les pièces à assembler (1, 2) sont pressées l'une contre l'autre avant le soudage et sont déplacées en direction longitudinale pendant l'opération de soudage au moyen d'un dispositif de transport usuel (10), et le soudage sur la face supérieure est exécuté de façon connue à l'aide d'un procédé de soudage UP, caractérisé en ce que, en même temps que le soudage UP exécuté sur la face supérieure, on effectue sur la face inférieure un soudage pendulaire combiné MSG-pulsé, dans lequel les brûleurs (11) sont mis en mouvement latéralement avec un dispositif pendulaire (15) et dans lequel la vitesse du mouvement pendulaire pour le guidage des brûleurs de soudage (11) est coordonnée avec la vitesse d'avance des pièces à souder (1, 2).

2. Procédé suivant la revendication 1, caractérisé en ce que la grandeur de la vitesse d'avance est choisie en fonction de l'épaisseur de paroi des tubes, de telle façon qu'aucun refroidissement supplémentaire ne soit nécessaire.

3. Procédé suivant la revendication 2, caractérisé en ce que l'on travaille avec une vitesse d'avance comprise dans la gamme de 1,1 à 1,5 m/min.

4. Procédé suivant la revendication 3, caractérisé en ce que l'on travaille avec une vitesse d'avance de 1,3 m/min.

5. Procédé suivant l'une quelconque des revendications 1 à 4, caractérisé en ce que, dans le soudage pendulaire MSG-pulsé, on effectue un mouvement pendulaire au moins par 2 mm d'avance.

6. Procédé suivant l'une quelconque des revendications 1 à 5, caractérisé en ce que les paramètres de soudage sont choisis de telle façon que l'épaisseur (D) du plat en acier (2) non atteinte par le soudage soit au maximum égale à 0,3 fois l'épaisseur (S) du plat en acier (2), que la somme des épaisseurs de cordons sur la face supérieure et la face inférieure (C1 + C2, respectivement C3 + C4) soit chaque fois au moins égale à 1,25 fois l'épaisseur (S) du plat en acier (2) et que l'épaisseur de la matière non fondue (A) du tube soit au moins égale à 2 mm.

7. Dispositif pour le soudage longitudinal de tubes (1) avec des plats en acier (2) pour la mise en oeuvre du procédé suivant l'une quelconque des revendications 1 à 6, dans lequel essentiellement un dispositif automatique de soudage UP avec au moins une paire de brûleurs de soudage stationnaires (4), avec des moyens (5) d'avance et de guidage du fil de soudage (6) et avec des moyens pour l'amenée (7) et des moyens pour l'évacuation (8) du flux UP (9) pour le soudage des cordons (N1, N2) sur la face supérieure, ainsi qu'un dispositif de transport (10) pour accoster et transporter les pièces à souder (1, 2) pendant l'opération de soudage sont disposés dans un bâti de machine (3), caractérisé en ce qu'au moins un dispositif pendulaire combiné MSG-pulsé avec une paire de brûleurs (11) est disposé dans le bâti de machine (3), sous les pièces à souder (1, 2), pour le soudage simultané des cordons (N3, N4) sur la face inférieure, les brûleurs MSG (11) étant disposés à une distance longitudinale déterminée (L) des brûleurs UP (4), étant aisément mis en mouvement latéralement par le dispositif pendulaire (15) et présentant un angle d'inclinaison (α) réglable entre la ligne centrale des brûleurs (4) et la verticale.

8. Dispositif suivant la revendication 7, caractérisé en ce que la distance longitudinale (L) entre les brûleurs UP (4) et les brûleurs MSG (11) vaut environ 320 mm.

9. Dispositif suivant l'une quelconque des revendications 7 à 8, caractérisé en ce que l'angle d'inclinaison (α) du brûleur MSG (11) vaut environ 27° à 30°.

10. Dispositif suivant l'une quelconque des revendications 7 à 9, caractérisé en ce qu'un dispositif pendulaire commun (15) est installé aux deux brûleurs MSG (11).

11. Dispositif suivant l'une quelconque des revendications 7 à 9, caractérisé en ce qu'un dispositif pendulaire (15) est installé à chaque brûleur MSG (11).
